# EUROPEAN PATENT SPECIFICATION

(11) **EP 4 015 306 B1**
(45) Date of publication and mention of the grant of the patent: **10.01.2024**
(21) Application number: 20216000.8
(22) Date of filing: 21.12.2020
(51) Int. Cl.: B60P 3/20, B60P 7/14

(54) **PARTITION WALL**
TRENNWAND
PAROI DE SÉPARATION

(43) Date of publication of application: 22.06.2022
(73) Proprietor: Axel Johnson International AB, 113 46 Stockholm (SE)
(72) Inventor: Andersson, Ragnvald, 467 94 GRÄSTORP (SE); Andreasson, Alexandra, 524 96 LJUNG (SE)
(74) Representative: Lind Edlund Kenamets Intellectual Property AB

(56) References cited:
- FR-A1- 2 058 169
- US-A- 3 017 842
- US-A- 4 277 920
- US-A1- 2002 192 046
- US-A1- 2005 207 859

## Description

### Field of the invention

The present disclosure relates to a detachable partition wall for partitioning cargo spaces in connection with cargo transport.

### Background

It is commonly desirable to partition a cargo space into several subdivisions, in order, for example to keep different types of cargo separate during transportation. Goods that are to be shipped to different destination can for instance clearly be separated by using partition walls. For transportation of perishable goods, it may be particularly advantageous to use partition walls to keep different parts of a refrigerated cargo space at different temperatures.

Existing solutions for dividing the space in a cargo trailer or the cargo space of a box truck include modular wall panels, which are commonly mounted in grooves or channels on the floor, ceiling and/or walls of the cargo space. The placement of those grooves or channels impose a limitation on the possible configuration of the wall panels. In some cases, the wall panels can be placed freely and are secured by friction or tension between the floor and ceiling. Such wall panels exist of varying sizes and weight. However, they can be cumbersome to move and adjust to the desired position. Another solution consists in providing a suspended wall panel that can slide in rails on the ceiling. This has the advantage of supporting much of the weight of the wall panel, thus making for easier handling, although at the cost of less free placement.

FR 2 058 169 discloses a partition wall having an inflatable peripheral seal. When the seal is in a deflated state, the wall is supported on resiliently mounted wheels. US 4 277 920 describes a movable wall system which includes a wall panel having an extendible portion. When the extendible portion is retracted, the wall panel is supported on roller members.

### Summary of the invention

In light of the above, there is a need for a partition wall offering more flexible configuration as well as easier handling. It is an object of the present disclosure to provide such a solution and to alleviate at least some of the above-mentioned drawbacks.

According to an aspect of the inventive concept, there is provided a partition wall section intended to be fitted between a floor and a ceiling of a cargo space, the wall section comprising a wall panel, a floor contacting portion arranged on a first edge of said wall panel and displaceable in a plane of the wall panel between a contracted position and an expanded position, and a ceiling contacting portion arranged on a second edge of the wall panel opposite the first edge. When the partition wall is arranged in a cargo space having a height corresponding to the height of the partition wall section, and the floor contacting portion is brought into its expanded position, said ceiling contacting portion is brought into contact with the ceiling. The wall section further comprises a plurality of rolling members arranged along said first edge of said wall panel. The wall section, in the contracted position of the floor contacting portion, is rollable on said rolling members. The floor contacting portion, in its expanded position, projects beyond said rolling members, so as to enable the wall section to be supported by said floor contacting portion, when in a substantially upright position. The partition wall section further comprises a maneuvering assembly arranged on the wall panel, the maneuvering assembly comprising a lever and a link. The lever is pivotably connected, at a first end of the lever, about a first axis. The link is pivotably connected, at a first end of the link, to a medial portion of the lever, about a second axis, and also pivotable, at a second end opposite the first end of the link, about a third axis. The maneuvering assembly is arranged such that an action of the lever is adapted to control the displacement of the floor contacting portion by changing the distance between the first and the third axis, whereby the distance between the first and the third axis is shorter in the contracted position of the floor contacting portion and longer in the expanded position of the floor contacting portion.

A partition wall according to the invention is easily movable, since it can be rolled on the floor of the cargo space. Heavy lifting is thus avoided, providing improved ergonomics for an operator. The rolling members also greatly simplify placement of the wall section in a desired position in the cargo space and allows for easy fine adjustment of the position.

The displacement of the floor contacting portion has the dual purpose of preventing the wall from rolling on the wheels once the right position has been found, and to increase a total height of the wall panel. When the panel is in the correct place, the floor contacting portion is moved to its expanded position, in which it projects beyond the wheels. The panel now rests on the floor contacting portion, and the wheels will be brought out of contact with the floor. When the floor contact potion is moved to its contracted position, the wheels will again be brought into contact with the floor, and the wall may again be easily moved.

The maneuvering assembly provides greater ease of fixating the partition wall section in the desired position in the cargo space with good control of the displacement. The combined action of the lever and the link provides an effective force multiplier. An operator can thus displace the floor contacting portion and thus lift the partition wall section and put the biasing member in tension with minimized effort.

The rolling members may be wheels having axles parallel with the first edge. Alternatively, the rolling members may be ball transfer units, which allow movement in all directions.

The floor contacting portion preferably extends along substantially the entire width of said wall panel. In this configuration, a sealing is obtained between the partition wall section and the floor of the cargo space. A sealing may be particularly advantageous for example where the partition wall section is used to separate different compartments of the cargo space having different temperatures.

In some embodiments, the rolling members are attached to the wall panel. This may provide for a compact partition wall section.

In some embodiments, the partition wall section may further comprise a biasing member adapted to produce a biasing force between said ceiling contacting portion and said floor contacting portion, for fixating the partition wall section in a desired position between the floor and the ceiling of the cargo space.

The biasing member may provide greater tension, thus improving the fixation of the wall panel between the floor and the ceiling of the cargo space. It also provides some flexibility, in that it may keep the tension constant even if the floor and/or the ceiling of the cargo space moves slightly, which is a common occurrence during cargo transportation. The biasing member may thus provide a more securely fixated partition wall.

In some embodiments, the lever, in the expanded position of the floor contacting portion, may be flush with a surface of said wall panel. This may provide a thin partition wall section. It may further prevent cargo from being scratched or otherwise damaged by a lever sticking out from the wall panel.

With such a configuration of the lever, the partition wall section may further comprise a release mechanism adapted to push said lever to pivot, from the expanded position of the floor contacting portion, such that said lever is no longer flush with a surface of said wall panel and a second end of said lever, opposite the first end, is accessible for actioning said lever.

In some embodiments, the biasing member may be mounted between said maneuvering assembly and said floor contacting portion. In other embodiments, the biasing member may be mounted between said maneuvering assembly and said wall panel.

A partition wall section according to the invention may comprise two parallel wall panels, wherein the floor contacting portion is arranged between said two parallel wall panels. A construction with two wall panels may provide a stiffer and/or more stable partition wall section. Free space between the wall panels in such a wall section may also be filled with insulating material, for using the partition wall section in a refrigerated cargo space.

In some embodiments, the floor contacting portion may be provided with a pad of flexible material such as rubber. This may give the floor contacting portion good grip on the floor of the cargo space and prevent accidental slipping while fixating the partition wall section in the cargo space. Additionally, it may provide an improved sealing between the partition wall section and the floor of the cargo space.

The wall panel of the partition wall section may further comprise a sealing strip, such as a soft rubber strip, along an edge of the wall section for establishing a seal between the wall section and the cargo space or an adjacent wall section.

According to a further aspect of the inventive concept, there is provided a partition wall section intended to be fitted between a floor and a ceiling of a cargo space, the wall section comprising a wall panel, a floor contacting portion arranged on a first edge of said wall panel and displaceable between a contracted position and an expanded position, and a ceiling contacting portion arranged on a second edge of the wall panel opposite the first edge. When the partition wall is arranged in a cargo space having a height corresponding to the height of the partition wall section, and the floor contacting portion is brought into its expanded position, said ceiling contacting portion is brought into contact with the ceiling. The wall section further comprises a plurality of rolling members arranged along said first edge of said wall panel. The wall section, in the contracted position of the floor contacting portion, is rollable on said rolling members. The floor contacting portion, in its expanded position, projects beyond said rolling members, so as to enable the wall section to be supported by said floor contacting portion, when in a substantially upright position. The rolling members and the floor contacting portion are arranged on a floor contacting member rotatably attached to the wall panel and adapted to rotatably displace the floor contacting portion between said expanded position and said contracted position, while simultaneously displacing the rolling members.

### Brief description of the drawings

The invention, some non-limiting embodiments and further advantages will now be further described with reference to the drawings, in which:
- Fig. 1: shows in perspective a partition wall section according to an embodiment of the invention;
- Figs. 2a-c: show in perspective view the partition wall section in use;
- Fig. 3: shows an exploded view of the partition wall section;
- Figs. 4a & 4b: show in perspective a close up view of the partition wall section with the floor contacting portion in contracted and expanded position, respectively;
- Fig. 5: shows in perspective an alternative embodiment of the rolling members of the partition wall section;
- Fig. 6: shows an exploded view the maneuvering assembly according to one embodiment of the invention;
- Fig. 7: shows an exploded view of the maneuvering assembly according to an alternative embodiment of the invention;
- Figs. 8a & 8b: show schematically a partition wall section according to a further alternative embodiment of the invention.

### Detailed description of the drawings

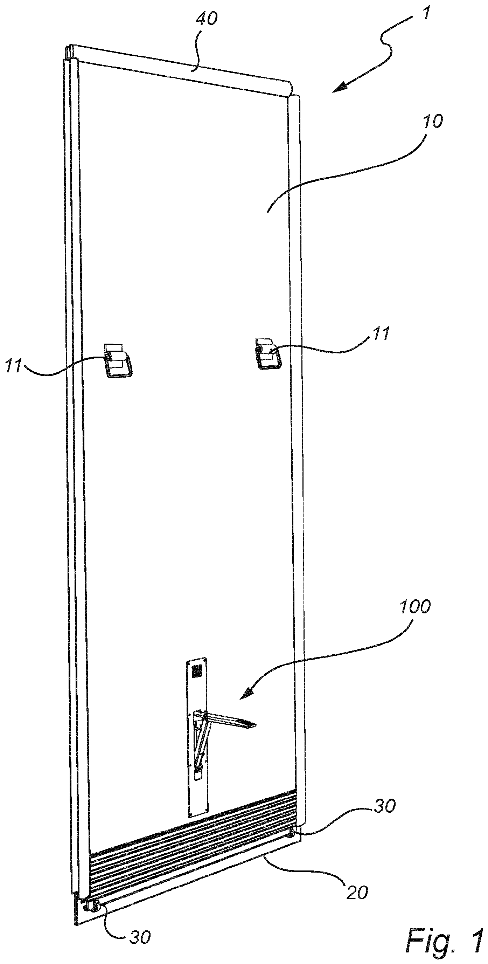

Fig. 1 shows a partition wall section 1 according to an embodiment of the invention. The partition wall section 1 generally includes a wall panel 10, a floor contacting portion 20, a ceiling contacting portion 40, and a maneuvering assembly 100 for controlling a displacement of the floor contacting portion 20. Rolling members, such as wheels 30, are arranged along a lower edge 12 of the wall panel 10. The wall section 1 is further provided with handles 11 mounted on the wall panel 10.

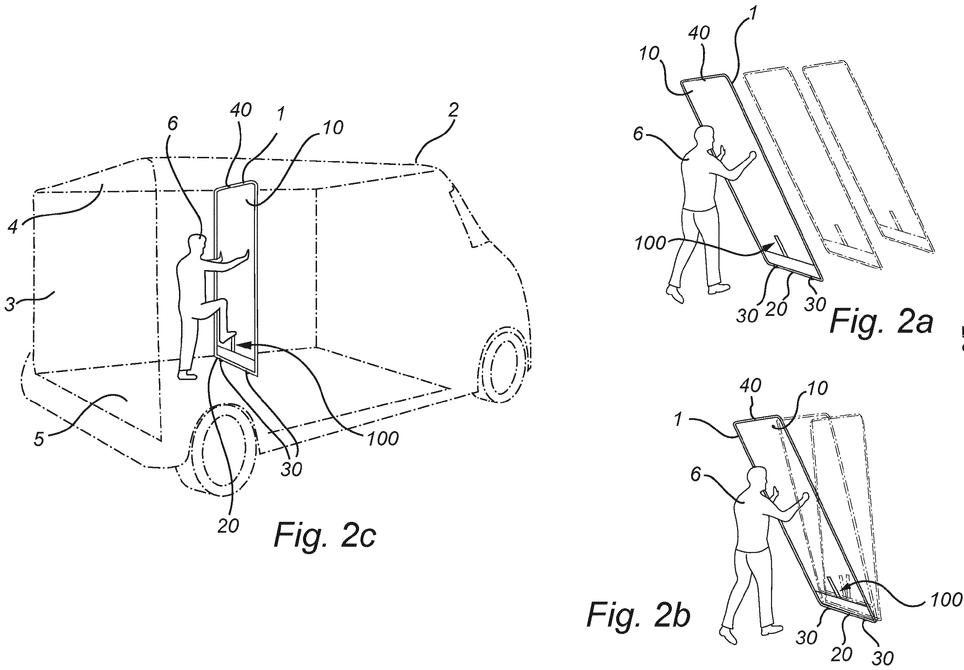

Figs. 2a-c illustrate how the partition wall section 1 is fitted between the ceiling 4 and the floor 5 of a cargo space 3, such as the cargo space 3 of a truck 2. The partition wall section 1 is easily movable into a desired position in the cargo space 3. As illustrated in Fig. 2a, an operator 6 can hold the wall section 1 by the handles 11 (not visible in Figs. 2a-c) and, thanks to the wheels 30, the wall section 1 can be rolled into position with minimal effort. When the desired position has been reached, the wall section 1 is tilted to a substantially upright position, as illustrated in Fig. 2b. Fig. 2c shows how the wall section 1 is then fixated in position by actioning the foot operated maneuvering assembly 100. Upon actioning the maneuvering assembly 100, the floor contacting portion 20 is displaced, in a plane of the wall panel 10, from a contracted position to an expanded position, so as to increase the distance between the floor contacting portion 20 and the ceiling contacting portion 40. Once the floor contacting portion 20 projects past the wheels 30, the wall section 1 is supported by the floor contacting portion 20 and the position of the wall section 1 in the cargo space 3 is set. As the displacement of the floor contacting portion 20 continues and the distance between the floor contacting 20 portion and the ceiling contacting portion 40 increases, the total height of the partition wall section 1 increases. Eventually, the ceiling contacting portion 40 is brought into contact with the ceiling 4 of the cargo space 3, thereby clamping the wall section 1 between the floor 5 and the ceiling 4 of the cargo space 3.

The maneuvering assembly 100 shown in Fig. 1 is foot operated, which enables the operator 6 to fixate the wall section 1 into place while still holding it in place with both hands. This helps stabilize the wall section 1 and avoids unwanted displacements of the wall section 1 when manipulating the maneuvering assembly 100. In alternative embodiments of the partition wall section 1, the maneuvering assembly 100 may be arranged higher up on the wall panel 10. In such a configuration, the operator 6 would hold the wall section 1 with one hand at one of the handles 11 and operate the maneuvering assembly 100 with the other hand.

In the following description, the terms "upper", "top", "lower", and "bottom" are to be interpreted with reference to the context illustrated in Fig. 1a. Wherever reference is made to a lower part or a lower side of the wall section 1 or a component thereof, it should be understood to refer to the part or side closest to the floor 5 of the cargo space 3, when the wall section 1 is in the vertical position of Fig. 1a. Similarly, any reference to an upper part or upper side of the wall section 1 or a component thereof should be understood to refer to the part or side closest to the ceiling 4 of the cargo pace 3, when the wall section 1 is in the vertical position of Fig. 1a.

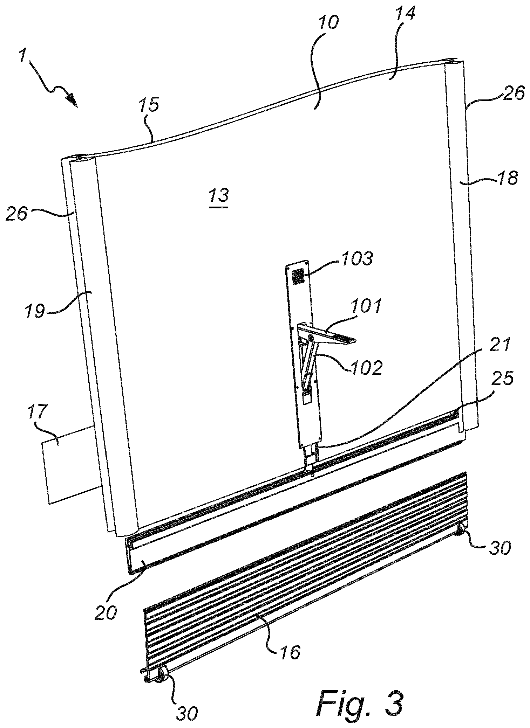

Fig. 3 shows, in a partly exploded view, the main components of the partition wall section 1 in Fig. 1. The wall panel 10 has a generally rectangular shape and comprises a main body 13 having a front face 14 and a back face 15. In applications where the wall is used to divide a cargo space in different temperature zones, a heat isolating material is typically provided between the front and back faces. The front and back faces are each provided with a kick plate 16, 17 arranged along, and parallel to, the lower edge of the respective face 14, 15. The front kick plate 16 and the back kick plate 17 are of similar dimensions, mounted parallel to each other and extending the width of the wall panel 10. The kick plates 16, 17 are further mounted offset with respect to the lower edge of the main body 13 of the wall panel 10, such that each kick plate 16, 17 extends beyond the lower edge of the main body 13 of the wall panel 10. A channel is thus created between the front 16 and back 17 kick plates, as a hollow extension of the main body 13 of the wall panel 10. The height of the channel is approximately half the height of the kick plates 16, 17.

In this embodiment, wheels 30 are mounted on the bottom edge of the front kick plate 16. Preferably, one wheel 30 is mounted close to each corner of the wall panel 10. The wheels 30 are mounted with a common rotation axis parallel to the edge of the kick plate 16. Although the partition wall section 1 is shown here comprising two wheels 30, three or more wheels 30 may alternatively be distributed along the bottom edge of the front kick plate 16.

A floor contacting portion 20 is arranged in the channel created between the front 16 and back 17 kick plates.

Each lateral edge of the wall panel 10 is here provided with an edge element 18, 19 having a `U'-shaped profile, forming an inwardly oriented groove 25 accommodating the body 13 of the wall panel 10. The edge elements 18, 19 extend past the lower edge of the body 13 of the wall panel, similarly to the kick plates 16, 17. The grooves 25 of the edge elements 18, 19 also accommodate the lateral edges of the floor contacting portion 20 and serve a guides during the displacement of the floor contacting portion 20. A sealing strip 26 in the form of twin flaps made of flexible, soft rubber is mounted on each edge element, opposite the groove 25. An edge element with a sealing strip (not visible in Fig. 3) is similarly mounted on the top edge of the wall panel. When the partition wall section 1 is fitted in the cargo space 3, these sealing strips 26 establish a sealing with a wall or a ceiling of the cargo space 3, or with another, adjacent, partition wall section.

The maneuvering assembly 100 is here arranged on the front face 14 of the wall panel 10, in a groove 21 of the main body 13 of the wall panel. This groove 21 extends parallel to the lateral edges of the wall panel 10, at equal distance therebetween, and is open to the lower edge of the body 13 of the wall panel 10. The maneuvering assembly 100 arranged in the groove 21 is connected to the floor connecting portion 20.

The maneuvering assembly 100 comprises a lever arm 101, which is adapted to be manipulated by an operator 6 to control the displacement of the floor contacting portion 20, via a link 102. The maneuvering assembly 100 further comprises a release mechanism 103 which is adapted push the lever arm 101 out of the wall panel 10 by pressing against the link 102.

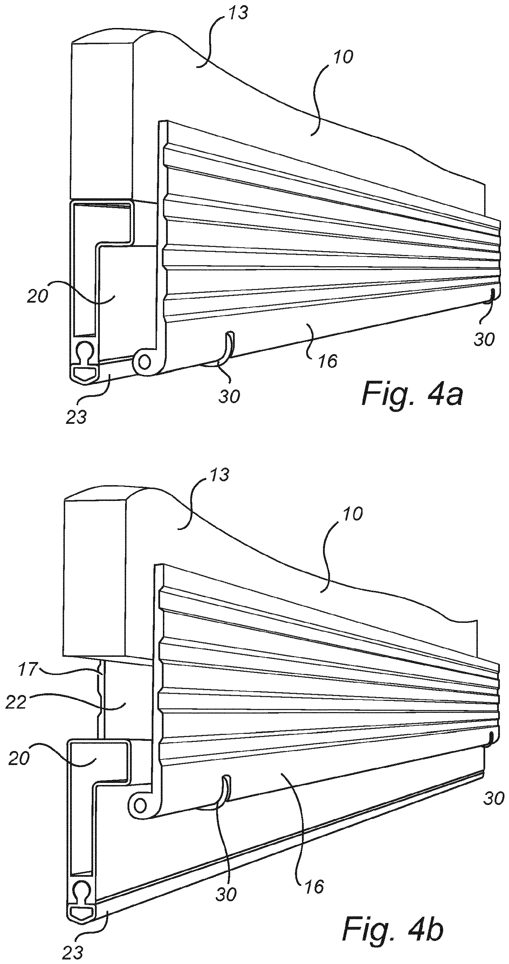

As shown more clearly in Figs. 4a and 4b, the floor contacting portion 20 is displaceable in the channel 22 created between the front 16 and back 17 kick plates, so as to be moveable between a contracted position (Fig. 4a) and an expanded position (Fig. 4b). The displacement of the floor contacting portion 20 occurs in a direction parallel to the lateral edges of the wall panel 10 and perpendicular to the bottom edge of the wall panel 10. The floor contacting portion 20 has a cross-section in the shape of an inverted 'L'. When the floor contacting portion 20 is in its contracted position, the base of the 'L' abuts the underside of the body 13 of the wall panel 10. The floor contacting portion 20 is a hollow profile, providing a light weight. Further, the floor contacting portion 20 is provided with a flexible rubber pad 23.

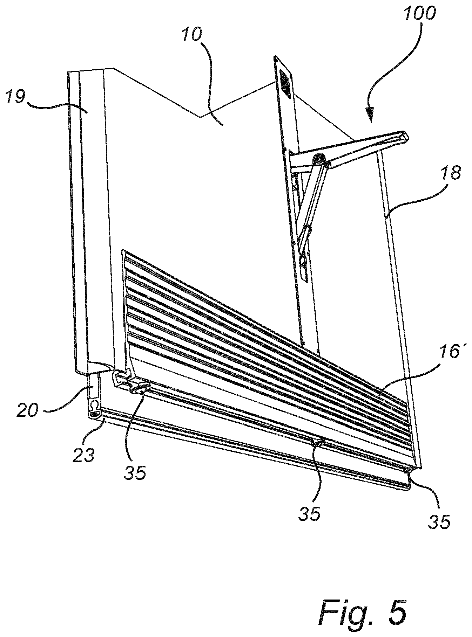

Fig. 5 shows a further alternative embodiment of the partition wall section 1 in which ball transfer units 35 are mounted on the front kick plate 16' instead of wheels. In this configuration, a lower part of the front kick plate 16' is tilted forward at an angle of 15°. The tilt allows compact ball transfer units 35 to provide effective rolling when the wall section 1 is held by an operator 6 in an angle with respect to the floor such as the one illustrated in Fig. 2a. In this embodiment, three ball transfer units 35 are distributed along the edge of the front kick plate 16', although two or four or more ball transfer units 35 could alternatively be mounted.

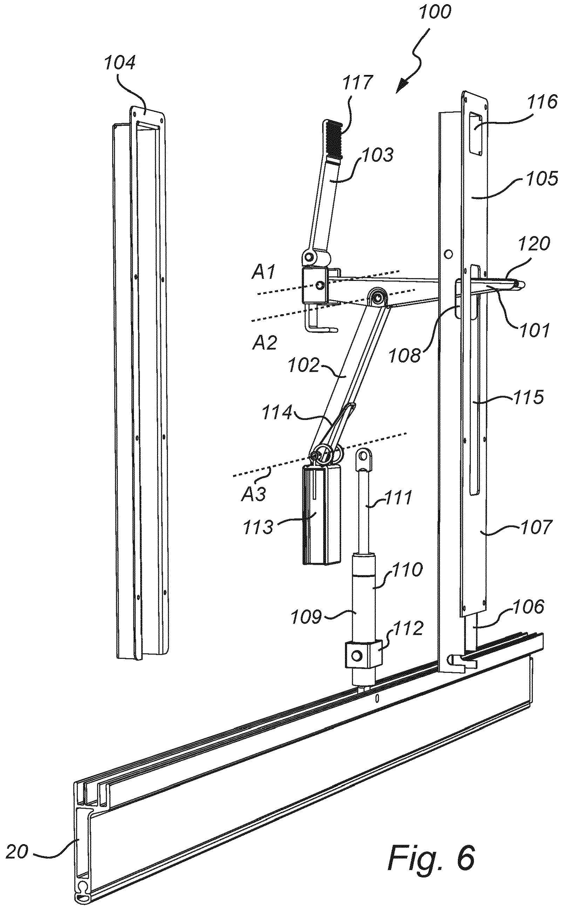

Fig. 6 shows an embodiment of the maneuvering assembly 100. In this example, the maneuvering assembly 100 is mounted in a casing consisting of a back part 104 that is fitted in the groove 21 of the body 13 of the wall panel 10, and a front part 105 that includes a front plate with openings 115, 116 for access to the lever 101 and the release mechanism 103. The front casing 105 comprises a hollow guide section 106 and a front plate 107.

The maneuvering assembly 100 is operated by a lever arm 101 which is pivotably connected at a first end to the front casing 105, through slots 108 in side walls of the front casing 105. The pivot axis A1 of the lever arm 101 is parallel to the bottom edge of the wall panel 10, with the lever arm 101 thus pivoting in a plane perpendicular to the plane of the wall panel 10. The pivot connection between the lever arm 101 and the front casing 105 is displaceable along the extension of the slots 108. The lever arm 101 has a gripping portion 120 at a second end, opposite the first end.

A biasing element in the form a gas spring 109 comprising a cylinder 110 and a piston rod 111 is connected at the cylinder end to the floor contacting portion 20. The cylinder 110 of the gas spring 109 is slidable through a gas spring support 112 which is fixedly mounted in the guide portion 106 of the front casing 105.

A link 102 is pivotably connected at one end to a medial portion of the lever arm 101, and at the other end to the piston rod 111 of the gas spring 109. Each pivot axes A2, A3 of the link 102 is parallel to the pivot axis A1 of the lever arm 101. A gas spring holder 113, encasing the piston rod 111 as well as part of the cylinder 110 of the gas spring 109 and adapted to slide in the guide section 106 of the front casing 105, is connected to the pivot connection connecting the piston rod 111 of the gas spring 109 to the link 102. The gas spring holder 13 is thus fixed in relation to the piston rod 111 but allows the cylinder 110 to slide in and out of the gas spring holder 113 depending on the compression of the gas spring 109.

A torsion spring 114, arranged at the pivot connection between the gas spring 109 and the link 102, biases the link 102 toward the plane of the wall panel 10.

The release mechanism 103 comprises a lever pivotably connected to the front casing 105. The lever of the release mechanism 103 extends on one side of its fulcrum toward the opening 116 of the front casing 105, through which an actuating portion 117 at one end of the lever of the release mechanism 103 can be pushed by an operator. On the other side of the fulcrum, the lever of the release mechanism 103 extends generally in the direction of the bottom edge of the wall panel 10. On this lower side of the fulcrum, the lever of the release mechanism has an `L' shape, the tip of the base of the `L' being adjacent to or abutting the link 102 when the link 102 is in the plane of the wall panel 10. In response to an operator pushing the actuating portion 117 of the lever of the release mechanism 103, the `L'-shaped portion of the lever of the release mechanism 103 pivots to exert a force on the link 103, thus pushing the link 102, and consequently the end of the lever arm 101 out of the plane of the wall panel 10. The end of the lever arm 101 is then more easily accessible.

In an alternative embodiment, a maneuvering assembly 100 could be similarly arranged, but without the release mechanism. In such a configuration, the opening 115 of the front plate of the front casing 105 may be longer, extending beyond the tip of the lever arm 101, so that the tip of the lever arm 101 can be gripped from the back side, even when the lever arm 101 is in the plane of the wall panel 10.

In use, when the partition wall section 1 is being rolled and put into position as illustrated in Figs 2a and 2b, the lever arm 101 is pivoted upward, with the gripping portion 120 outside of the front panel 107 of the front casing 105. The floor contacting portion 20 is then in its contracted position. When the desired position has been found, the operator 6 actions the lever arm 101 to pivot downward, as shown in Fig. 2c. The downward rotation of the lever arm 101 pushes the link 102 down by bringing the pivot axes A1, A2, A3 into alignment in the guide section 106 of the front casing 105. The distance between the pivot axes A1 and A3 is thus increased, which in turn pushes down the gas spring 109, bringing the floor contacting portion 20 in contact with the floor 5. In the expanded position of the floor contacting portion 20, the lever 101 is pivoted downward to be flush with the front panel 107 of the front casing 105. The gas spring 109 is compressed to provide a biasing force, fixating the wall section 1 between the floor 5 and the ceiling 4.

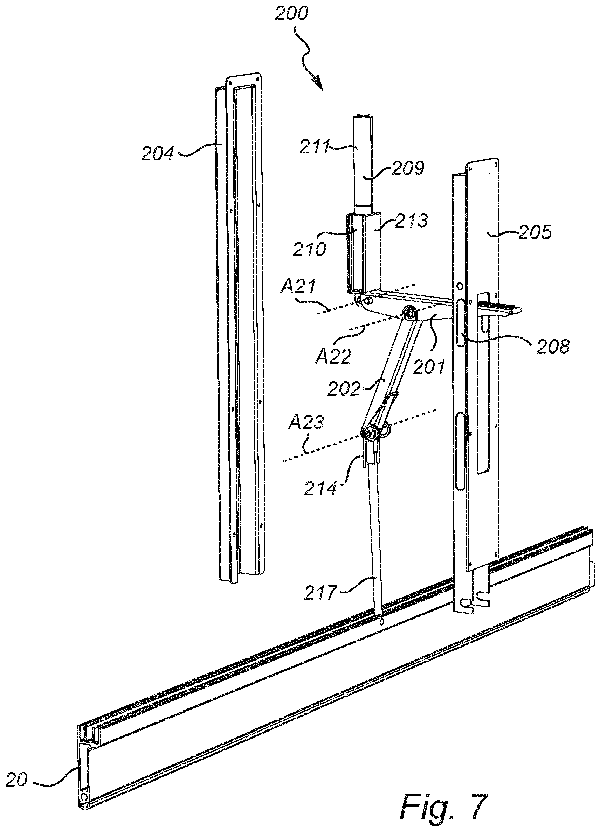

An alternative embodiment of the maneuvering assembly is shown in Fig. 7. This embodiment differs from the embodiment described in Fig. 6 mainly in that the biasing element 209 is arranged above the lever arm 201, instead of below the link 202. The maneuvering assembly 200 is similarly mounted between a back casing 204, fitted in the groove 21 of the body 13 of the wall panel 10, and a front casing 205. The front casing 205 comprises a hollow guide section 206 and a front plate 207.

The maneuvering assembly is operated by a lever arm 201 which is pivotably connected at a first end to the front casing 205, through slots 208 in the side walls of the front casing 205. The pivot axis A21 of the lever arm 201 is parallel to the bottom edge of the wall panel 10, with the lever arm 201 thus pivoting in a plane perpendicular to the plane of the wall panel 10. The pivot connection between the lever arm 201 and the front casing 205 is displaceable along the extension of the slots 208.

A biasing element in the form of a gas spring 209 comprising a cylinder 210 and a piston rod 211 is encased in a gas spring holder 213 adapted to slide in the guide section 206 of the front casing 205. The bottom end 215 of the gas spring holder 213 abuts the first end of the lever arm 201. The top 216 of the piston rod 211 abuts the top of the back casing 204. The gas spring 209 is adapted to compress in response to a displacement of the first end the lever arm 201 in the guide section 206 of the front casing 205, pushing on the bottom end 215 of the gas spring holder 213.

A link 202 is pivotably connected at one end to a medial portion of the lever arm 201, and at the other end to a guide member 217 adapted to slide in the guide section 206 of the front casing 205. The guide member 217 is connected, at an opposite end, to the floor contacting portion 20. Each of the pivot axes A22, A23 of the link 202 is parallel to the pivot axis A21 of the lever arm 201. A torsion spring 214, arranged at the pivot connection between the link 202 and the guide member 217 biases the link 202 toward the plane of the wall panel 10.

In a further alternative, the maneuvering assembly may be designed as the mechanism disclosed in the co-pending patent application titled "Cargo Bar", by the same applicant, herewith incorporated by reference.

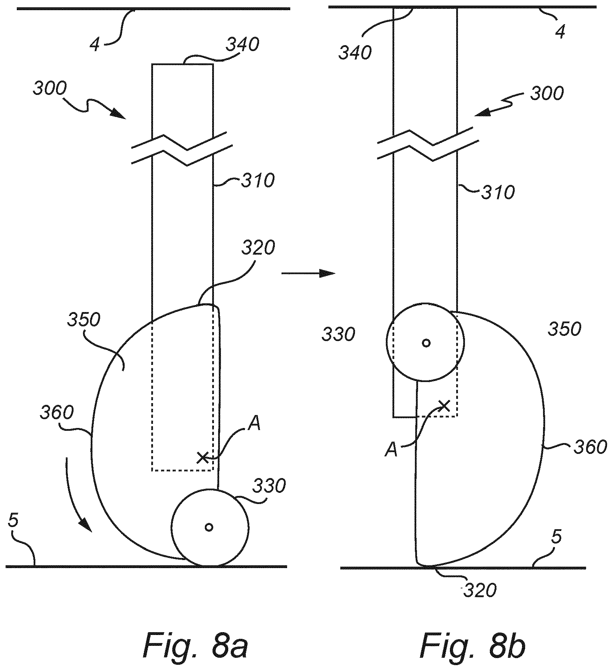

In an alternative embodiment of the partition wall section 300 shown schematically in Figs. 8a and 8b, the floor contacting portion 320 forms part of a floor contacting member 350 which is rotatably attached to the wall panel 310. The floor contacting portion 320 is arranged on one side of the floor contacting member 350, which is rotatably displaceable between a contracted position of the floor contacting portion 320 (Fig. 8a) and an expanded position of the floor contacting portion 320 (Fig. 8b). Rolling members 330 are arranged on the floor contacting member 350 such that a vertical distance between the rolling members 330 and the pivot axis A of the floor contacting member 350 is smaller than a vertical distance between said pivot axis A and the floor contacting portion 320. Thanks to this asymmetric arrangement of the floor contacting portion 320, pivot axis A of the floor contacting member 350, and the rolling members 330, the total height of the partition wall section 300 is increased when the floor contacting portion 320 is in its expanded position, and the ceiling contacting portion 340 is thus brought into contact with the ceiling 4 of the cargo space.

The floor contacting member 350 is here shown with a portion 360 having an arcuate shape, which may facilitate the displacement of the floor contacting member 350. However, other shapes of the floor contacting member 350 are possible.

The person skilled in the art realizes that the present invention by no means is limited to the embodiments described above. The features of the described embodiments may be combined in different ways, and many modifications and variations are possible within the scope of the appended claims. In the claims, any reference signs placed in parentheses shall not be construed as limiting the claim. The word "comprising" does not exclude the presence of other elements than those listed in the claim. The word "a" or "an" preceding an element does not exclude the presence of a plurality of such elements.

## Claims

1. A partition wall section (1) intended to be fitted between a floor (5) and a ceiling (4) of a cargo space (3), the wall section (1) comprising:
a wall panel (10),
a floor contacting portion (20) arranged on a first edge of said wall panel (10) and displaceable in a plane of the wall panel (10) between a contracted position and an expanded position,
a ceiling contacting portion (40) arranged on a second edge of the wall panel (10) opposite the first edge, so that, when the partition wall (1) is arranged in a cargo space (3) having a height corresponding to the height of the partition wall section (1), and the floor contacting portion (20) is brought into its expanded position, said ceiling contacting portion (40) is brought into contact with the ceiling (4), and
a plurality of rolling members (30) arranged along said first edge of said wall panel (10), such that:
when the floor contacting portion (20) is in its contracted position, the wall section (1) is rollable on said rolling members (30), and
when the floor contacting portion (20) is in its expanded position, the floor contacting portion (20) projects beyond said rolling members (30), so as to enable the wall section (1) to be supported by said floor contacting portion (20), when in a substantially upright position,
**characterized in that**
the wall section (1) further comprises a maneuvering assembly (100; 200) arranged on the wall panel, the maneuvering assembly (100; 200) comprising a lever (101; 201) and a link (102; 202),
the lever (101; 201) being pivotable, at a first end of said lever (101; 201), about a first axis (A1; A21), and
the link (102; 202) being pivotably connected, at a first end of said link (102; 202), to a medial portion of said lever (101; 201), about a second axis (A2; A22), and being pivotable, at a second end opposite the first end of said link (102; 202), about a third axis (A3; A23),
wherein the maneuvering assembly (100; 200) is arranged such that an action of the lever (101; 201) is adapted to control the displacement of the floor contracting portion (20) by changing the distance between the first (A1; A21) and the third axis (A3; A23), whereby the distance between the first (A1; A21) and the third (A3; A23) axis is shorter in the contracted position of the floor contacting portion (20) and longer in the expanded position of the floor contacting portion (20)..

2. The partition wall section (1) according to claim 1, wherein said floor contacting portion (20) extends along substantially the entire width of said wall panel (10).

3. The partition wall section (1) according to claim 1 or 2, wherein said rolling members (30) are attached to the wall panel (10).

4. The partition wall section (1) according to any one of the preceding claims, further comprising a biasing member (109; 209) adapted to produce a biasing force between said ceiling contacting portion (40) and said floor contacting portion (20), for fixating the partition wall section (1) in a desired position between the floor (5) and the ceiling (4) of the cargo space (3).

5. The partition wall section (1) according to claim 1, wherein said lever (101; 201), in the expanded position of the floor contacting portion (20), is flush with a surface of said wall panel (10).

6. The partition wall section (1) according to claim 5, further comprising a release mechanism (103) adapted to push said lever (101) to pivot, from the expanded position of the floor contacting portion (20), such that said lever (101) is no longer flush with a surface of said wall panel (10) and a second end of said lever (101), opposite the first end, is accessible for actioning said lever (101).

7. The partition wall section (1) according to claim 4, wherein said biasing member (209) is mounted between said maneuvering assembly (200) and said floor contacting portion (20).

8. The partition wall section (1) according to claim 4, wherein said biasing member (109) is mounted between said maneuvering assembly (100) and said wall panel (10).

9. The partition wall section (1) according to any one of the preceding claims comprising two parallel wall panels, wherein the floor contacting portion is arranged between said two parallel wall panels.

10. The partition wall section (1) according to any one of the preceding claims, wherein the floor contacting portion is provided with a pad of a flexible material such as rubber.

11. The partition wall section (1) according to any one of the preceding claims, wherein the wall section further comprises a sealing strip (26), such as a soft rubber strip, along an edge of the wall section (1) for establishing a seal between the wall section and the cargo space (3) or an adjacent wall section.

12. A partition wall section (1) intended to be fitted between a floor (5) and a ceiling (4) of a cargo space (3), the wall section (1) comprising:
a wall panel (10),
a floor contacting portion (20) arranged on a first edge of said wall panel (10) and displaceable between a contracted position and an expanded position,
a ceiling contacting portion (40) arranged on a second edge of the wall panel (10) opposite the first edge, so that, when the partition wall (1) is arranged in a cargo space (3) having a height corresponding to the height of the partition wall section (1), and the floor contacting portion (20) is brought into its expanded position, said ceiling contacting portion (40) is brought into contact with the ceiling (4), and
a plurality of rolling members (30) arranged along said first edge of said wall panel (10), such that:
when the floor contacting portion (20) is in its contracted position, the wall section (1) is rollable on said rolling members (30), and
when the floor contacting portion (20) is in its expanded position, the floor contacting portion (20) projects beyond said rolling members (30), so as to enable the wall section (1) to be supported by said floor contacting portion (20), when in a substantially upright position,
**characterized in that**
said rolling members (330) and said floor contacting portion (320) are arranged on a floor contacting member (350) rotatably attached to the wall panel (310) and adapted to rotatably displace the floor contacting portion (320) between said expanded position and said contracted position, while simultaneously displacing the rolling members (330).

## Patentansprüche

1. Trennwandabschnitt (1), der dafür vorgesehen ist, zwischen einem Boden (5) und einer Decke (4) eines Frachtraumes (3) eingepasst zu werden, wobei der Wandabschnitt (1) Folgendes umfasst:
eine Wandplatte (10),
einen Bodenberührungsabschnitt (20), der an einer ersten Kante der Wandplatte (10) angeordnet und in einer Ebene der Wandplatte (10) zwischen einer zusammengezogenen Position und einer ausgefahrenen Position verschiebbar ist,
einen Deckenberührungsabschnitt (40), der an einer zweiten Kante der Wandplatte (10), entgegengesetzt zu der ersten Kante, angeordnet ist, so dass, wenn die Trennwand (1) in einem Frachtraum (3) angeordnet wird, der eine Höhe aufweist, die der Höhe des Trennwandabschnitts (1) entspricht, und der Bodenberührungsabschnitt (20) in seine ausgefahrene Position gebracht wird, der Deckenberührungsabschnitt (40) in Berührung mit der Decke (4) gebracht wird, und
eine Vielzahl von rollenden Elementen (30), die entlang der ersten Kante der Wandplatte (10) angeordnet sind, so dass:
wenn sich der Bodenberührungsabschnitt (20) in seiner zusammengezogenen Position befindet, der Wandabschnitt (1) auf den rollenden Elementen (30) rollbar ist und,
wenn sich der Bodenberührungsabschnitt (20) in seiner ausgefahrenen Position befindet, der Bodenberührungsabschnitt (20) über die rollenden Elemente (30) hinaus vorspringt, um so zu ermöglichen, dass der Wandabschnitt (1) durch den Bodenberührungsabschnitt (20) getragen wird, wenn er sich in einer im Wesentlichen aufrechten Position befindet,
**dadurch gekennzeichnet, dass**
der Trennwandabschnitt (1) ferner eine Manövrierbaugruppe (100; 200) umfasst, die an der Wandplatte angeordnet ist, wobei die Manövrierbaugruppe (100; 200) einen Hebel (101; 201) und ein Verbindungsglied (102; 202) umfasst
der Hebel (101; 201), an einem ersten Ende des Hebels (101; 201), um eine erste Achse (A1; A2) schwenkbar ist und
das Verbindungsglied (102; 202), an einem ersten Ende des Verbindungsgliedes (102; 202), um eine zweite Achse (A2; A22), schwenkbar mit einem mittleren Abschnitt des Hebels (101; 201) verbunden ist und, an einem zweiten Ende, entgegengesetzt zu dem ersten Ende des Verbindungsgliedes (102; 202), um eine dritte Achse (A3; A23), schwenkbar ist,
wobei die Manövrierbaugruppe (100; 200) derart angeordnet ist, dass eine Betätigung des Hebels (101; 201) angepasst ist, um die Verschiebung des Bodenberührungsabschnitts (20) durch Verändern der Entfernung zwischen der ersten (A1; A21) und der dritten Achse (A3; A23) zu steuern, wodurch die Entfernung zwischen der ersten (A1; A21) und der dritten (A3; A23) Achse in der zusammengezogenen Position des Bodenberührungsabschnitts (20) kürzer und in der ausgefahrenen Position des Bodenberührungsabschnitts (20) länger ist.

2. Trennwandabschnitt (1) nach Anspruch 1, wobei sich der Bodenberührungsabschnitt (20) entlang im Wesentlichen der gesamten Breite der Wandplatte (10) erstreckt.

3. Trennwandabschnitt (1) nach Anspruch 1 oder 2, wobei die rollenden Elemente (30) an der Wandplatte (10) befestigt sind.

4. Trennwandabschnitt (1) nach einem der vorhergehenden Ansprüche, der ferner ein Vorspannelement (109; 209) umfasst, das angepasst ist, um eine Vorspannkraft zwischen dem Deckenberührungsabschnitt (40) und dem Bodenberührungsabschnitt (20) zu erzeugen, zum Fixieren des Trennwandabschnitts (1) in einer gewünschten Position zwischen dem Boden (5) und der Decke (4) des Frachtraumes (3).

5. Trennwandabschnitt (1) nach Anspruch 1, wobei der Hebel (101; 201), in der ausgefahrenen Position des Bodenberührungsabschnitts (20), bündig mit einer Oberfläche der Wandplatte (10) ist.

6. Trennwandabschnitt (1) nach Anspruch 5, der ferner einen Freigabemechanismus (103) umfasst, der angepasst ist, um den Hebel (101) zu drücken, um, aus der ausgefahrenen Position des Bodenberührungsabschnitts (20), zu schwenken, so dass der Hebel (101) nicht mehr bündig mit einer Oberfläche der Wandplatte (10) ist und ein zweites Ende des Hebels (101), entgegengesetzt zu dem ersten Ende, zum Betätigen des Hebels (101) zugänglich ist.

7. Trennwandabschnitt (1) nach Anspruch 4, wobei das Vorspannelement (209) zwischen der Manövrierbaugruppe (200) und dem Bodenberührungsabschnitt (20) angebracht ist.

8. Trennwandabschnitt (1) nach Anspruch 4, wobei das Vorspannelement (109) zwischen der Manövrierbaugruppe (100) und der Wandplatte (10) angebracht ist.

9. Trennwandabschnitt (1) nach einem der vorhergehenden Ansprüche, der zwei parallele Wandplatten umfasst, wobei der Bodenberührungsabschnitt zwischen den zwei parallelen Wandplatten angeordnet ist.

10. Trennwandabschnitt (1) nach einem der vorhergehenden Ansprüche, wobei der Bodenberührungsabschnitt mit einem Polster aus einem flexiblen Material, wie beispielsweise Gummi, versehen ist.

11. Trennwandabschnitt (1) nach einem der vorhergehenden Ansprüche, wobei der Wandabschnitt ferner einen Abdichtungsstreifen (26), wie beispielsweise einen weichen Gummistreifen, entlang einer Kante des Wandabschnitts (1) zum Herstellen einer Dichtung zwischen dem Wandabschnitt und dem Frachtraum (3) oder einem benachbarten Wandabschnitt umfasst.

12. Trennwandabschnitt (1), der dafür vorgesehen ist, zwischen einem Boden (5) und einer Decke (4) eines Frachtraumes (3) eingepasst zu werden, wobei der Wandabschnitt (1) Folgendes umfasst:
eine Wandplatte (10),
einen Bodenberührungsabschnitt (20), der an einer ersten Kante der Wandplatte (10) angeordnet und in einer Ebene der Wandplatte (10) zwischen einer zusammengezogenen Position und einer ausgefahrenen Position verschiebbar ist,
einen Deckenberührungsabschnitt (40), der an einer zweiten Kante der Wandplatte (10), entgegengesetzt zu der ersten Kante, angeordnet ist, so dass, wenn die Trennwand (1) in einem Frachtraum (3) angeordnet wird, der eine Höhe aufweist, die der Höhe des Trennwandabschnitts (1) entspricht, und der Bodenberührungsabschnitt (20) in seine ausgefahrene Position gebracht wird, der Deckenberührungsabschnitt (40) in Berührung mit der Decke (4) gebracht wird, und
eine Vielzahl von rollenden Elementen (30), die entlang der ersten Kante der Wandplatte (10) angeordnet sind, so dass:
wenn sich der Bodenberührungsabschnitt (20) in seiner zusammengezogenen Position befindet, der Wandabschnitt (1) auf den rollenden Elementen (30) rollbar ist und,
wenn sich der Bodenberührungsabschnitt (20) in seiner ausgefahrenen Position befindet, der Bodenberührungsabschnitt (20) über die rollenden Elemente (30) hinaus vorspringt, um so zu ermöglichen, dass der Wandabschnitt (1) durch den Bodenberührungsabschnitt (20) getragen wird, wenn er sich in einer im Wesentlichen aufrechten Position befindet,
**dadurch gekennzeichnet, dass**
die rollenden Elemente (330) und der Bodenberührungsabschnitt (320) an einem Bodenberührungselement (350) angeordnet sind, das drehbar an der Wandplatte (310) befestigt und angepasst ist, um den Bodenberührungsabschnitt (320) drehbar zwischen der ausgefahrenen Position und der zusammengezogenen Position zu verschieben, während gleichzeitig die rollenden Elemente (330) verschoben werden.

## Revendications

1. Section de paroi de séparation (1) destinée à être ajustée entre un plancher (5) et un plafond (4) d'un espace de cargaison (3), la section de paroi (1) comprenant :
un panneau de paroi (10),
une section de contact avec le plancher (20) disposée sur un premier bord dudit panneau de paroi (10) et déplaçable dans un plan du panneau de paroi (10) entre une position contractée et une position étendue,
une section de contact avec le plafond (40) disposée sur un second bord du panneau de paroi (10) opposé au premier bord de manière à ce que, lorsque la paroi de séparation (1) est disposée dans un espace de cargaison (3) ayant une hauteur correspondant à la hauteur de la section de paroi de séparation (1), et que la section de contact avec le plancher (20) est amenée dans sa position étendue, ladite section de contact avec le plafond (40) soit amenée en contact avec le plafond (4), et
une pluralité d'éléments roulants (30) disposés le long dudit premier bord dudit panneau de séparation (10), de sorte que :
lorsque la section de contact avec le plancher (20) est dans sa position contractée, la section de paroi (1) peut rouler sur lesdits éléments roulants (30), et
lorsque la section de contact avec le plancher (20) est dans sa position étendue, la section de contact avec le plancher (20) est saillante au-delà desdits éléments roulants (30) de manière à permettre à la section de paroi (1) d'être supportée par ladite section de contact avec le plancher (20) lorsqu'elle est dans une position sensiblement redressée,
**caractérisée en ce que**
la section de paroi (1) comprend en outre un ensemble de manoeuvre (100 ; 200) disposé sur le panneau de paroi, l'ensemble de manoeuvre (100 ; 200) comprenant un levier (101 ; 201) et un lien (102 ; 202),
le levier (101 ; 201) étant pivotable, à une première extrémité dudit levier (101 ; 201), autour d'un premier axe (A1 ; A21), et
le lien (102 ; 202) étant connectable de manière pivotable, à une première extrémité dudit lien (102 ; 202), vers une section médiane dudit levier (101 ; 201), autour d'un deuxième axe (A2 ; A22) et étant pivotable, à une seconde extrémité opposée à la première extrémité dudit lien (102 ; 202), autour d'un troisième axe (A3 ; A23),
l'ensemble de manoeuvre (100 ; 200) étant disposé de manière à ce qu'une action du levier (101 ; 201) soit apte à commander le déplacement de la section de contact avec le plancher (20) en modifiant la distance entre les premier (A1 ; A21) et troisième axes (A3 ; A23), la distance entre les premier (A1 ; A21) et troisième axes (A3 ; A23) étant ainsi plus courte dans la position contractée de la section de contact avec le plancher (20) et plus longue dans la position étendue de la section de contact avec le plancher (20).

2. Section de paroi de séparation (1) selon la revendication 1, dans laquelle ladite section de contact avec le plancher (20) s'étend sensiblement sur toute la largeur dudit panneau de paroi (10).

3. Section de paroi de séparation (1) selon la revendication 1 ou 2, dans laquelle lesdits éléments roulants (30) sont fixés au panneau de paroi (10).

4. Section de paroi de séparation (1) selon l'une quelconque des revendications précédentes, comprenant en outre un élément d'inclinaison (109 ; 209) apte à produire une force d'inclinaison entre ladite section de contact avec le plafond (40) et ladite section de contact avec le plancher (20) pour fixer la section de paroi de séparation (1) dans une position désirée entre le plancher (5) et le plafond (4) de l'espace de cargaison (3).

5. Section de paroi de séparation (1) selon la revendication 1, dans laquelle ledit levier (101 ; 201), dans la position étendue de la section de contact avec le plancher (20), est à fleur avec une surface dudit panneau de paroi (10).

6. Section de paroi de séparation (1) selon la revendication 5, comprenant en outre un mécanisme de relâchement (103) apte à pousser ledit levier (101) à pivoter depuis la position étendue de la section de contact avec le plancher (20) de manière à ce que ledit levier (101) ne soit plus à fleur avec une surface dudit panneau de paroi (10) et qu'une seconde extrémité dudit levier (101) opposée à la première extrémité soit accessible pour actionner ledit levier (101).

7. Section de paroi de séparation (1) selon la revendication 4, dans laquelle ledit élément d'inclinaison (209) est monté entre ledit ensemble de manoeuvre (200) et ladite section de contact avec le plancher (20).

8. Section de paroi de séparation (1) selon la revendication 4, dans laquelle ledit élément d'inclinaison (109) est monté entre ledit ensemble de manoeuvre (100) et ledit panneau de paroi (10).

9. Section de paroi de séparation (1) selon l'une quelconque des revendications précédentes, comprenant deux panneaux de paroi parallèles, la section de contact avec le plancher étant disposée entre lesdits deux panneaux de paroi parallèles.

10. Section de paroi de séparation (1) selon l'une quelconque des revendications précédentes, dans laquelle la section de contact avec le plancher est pourvue d'un tampon en matériau souple comme du caoutchouc.

11. Section de paroi de séparation (1) selon l'une quelconque des revendications précédentes, dans laquelle section de paroi comprend en outre une bande d'étanchéité (26), comme une bande en caoutchouc mou, le long d'un bord de la section de paroi (1) pour établir un joint entre la section de paroi et l'espace de cargaison (3) ou une section de paroi adjacente.

12. Section de paroi de séparation (1) destinée à être ajustée entre un plancher (5) et un plafond (4) d'un espace de cargaison (3), la section de paroi (1) comprenant :
un panneau de paroi (10),
une section de contact avec le plancher (20) disposée sur un premier bord dudit panneau de paroi (10) et déplaçable entre une position contractée et une position étendue,
une section de contact avec le plafond (40) disposée sur un second bord du panneau de paroi (10) opposé au premier bord de manière à ce que, lorsque la paroi de séparation (1) est disposée dans un espace de cargaison (3) ayant une hauteur correspondant à la hauteur de la section de paroi de séparation (1), et que la section de contact avec le plancher (20) est amenée dans sa position étendue, ladite section de contact avec le plafond (40) soit amenée en contact avec le plafond (4), et
une pluralité d'éléments roulants (30) disposés le long dudit premier bord dudit panneau de paroi (10), de sorte que :
lorsque la section de contact avec le plancher (20) est dans sa position contractée, la section de paroi (1) peut rouler sur lesdits éléments roulants (30), et
lorsque la section de contact avec le plancher (20) est dans sa position étendue, la section de contact avec le plancher (20) est saillante au-delà desdits éléments roulants (30) de manière à permettre à la section de paroi (1) d'être supportée par ladite section de contact avec le plancher (20) lorsqu'elle est dans une position sensiblement redressée,
**caractérisée en ce que**
lesdits éléments roulants (330) et ladite section de contact avec le plancher (320) sont disposés sur un élément de contact avec le plancher (350) fixé de manière à pouvoir tourner au panneau de paroi (310) et apte à déplacer avec possibilité de rotation la section de contact avec le plancher (320) entre ladite position étendue et ladite position contractée tout en déplaçant simultanément les éléments roulants (330).
